# EUROPÄISCHE PATENTANMELDUNG

(11) **EP 1 542 159 A1**
(43) Veröffentlichungstag der Anmeldung: **15.06.2005**
(21) Anmeldenummer: 03028414.5
(22) Anmeldetag: 10.12.2003
(51) Int. Cl.: G06K 19/077, G06K 7/00

(54) **Karte und Schreib-Lese-Gerät für Karten**

(71) Anmelder: Marron, Pedro José, Dr., 70178 Stuttgart (DE)
(72) Erfinder: Marron, Pedro José, Dr., 70178 Stuttgart (DE)
(74) Vertreter: Lucht, Silvia

(57) **Zusammenfassung**

Es werden eine Karte und ein Schreib-Lese-Gerät für Karten vorgeschlagen, bei denen Daten, welche in einem Datenspeicher (21) des Schreib-Lese-Geräts abgelegt sind, auf den Speicherchip (2) und/oder den Magnetstreifen (3) und/oder den Bildschirm (8,9) der Karte übertragen werden. Hierzu sind Schnittstellen (15,16) vorgesehen.

## Beschreibung

### Stand der Technik

Die Erfindung geht aus von einer Karte nach dem Oberbegriff des Anspruchs 1 und von einem Schreib-Lese-Gerät nach dem Oberbegriff des Anspruchs 7.

Aus dem Stand der Technik sind Karten sowie Chipkarten, bekannt, welche aus einer Kunststoffkarte als Grundsubstrat und einem Speicherchip, einem Magnetstreifen oder einem programmierbaren Mikroprozessor bestehen. Über einen Kontakt an der Oberfläche oder kontaktlos kann die Karte mit einem entsprechenden Schreib-Lese-Gerät kommunizieren. Auf dem an der Karte befestigten Speicherchip, dem Magnetstreifen oder dem programmierbaren Mikroprozessor können verschiedene abrufbare anonyme Daten, wie beispielsweise bei einer Telefonkarte, oder individuelle Daten, wie beispielsweise bei einer Kreditkarte oder einer Krankenversicherungskarte, gespeichert werden. Die Karte wird zum Beispiel als Identifikationskarte bei Zugangskontrollsystemen oder als Kreditkarte im bargeldlosen Zahlungsverkehr bei POS-Systemen eingesetzt. Üblicherweise steht für jede der genannten Anwendungen eine separate Karte zur Verfügung. Dies führt dazu, dass der Benutzer eine Vielzahl derartiger Karten besitzt und diese meist ständig mit sich führt.

Die bekannten individuellen Karten haben den Nachteil, dass ihr Aussehen vom Hersteller der Karte festgelegt wird. Der Benutzer hat auf das Aussehen der Karte in der Regel keinen Einfluss. Darüber hinaus ist für jede spezielle Anwendung eine gesonderte Karte notwendig. Ein illegaler Zugriff auf die auf der Karte abgelegten Daten durch unberechtigte Dritte kann insbesondere bei Diebstahl nahezu nicht verhindert werden. Schließlich hat der Benutzer keine Möglichkeit, die auf der Karte abgelegten Daten einzusehen. Er benötigt hierzu in der Regel ein Schreib-Lese-Gerät, welches er lediglich dort auffindet, wo die konkrete Anwendung ausgeführt werden soll. Der Benutzer kann jedoch nicht beispielsweise bei sich zu Hause überprüfen, welcher Geldbetrag noch auf seiner Geldkarte abgelegt ist, oder ob seine Versicherungskarte bereits seine neue Privatanschrift enthält.

### Die Erfindung und ihre Vorteile

Gegenüber den bekannten Karten hat die erfindungsgemäße Karte mit den Merkmalen des Anspruchs 1 den Vorteil, dass an der Karte ein Bildschirm vorgesehen ist, auf dem Daten angezeigt werden können. Diese Daten werden über eine Schnittstelle durch das Schreib-Lese-Gerät an die Karte übermittelt. Hierzu wird ein Schreib-Lese-Gerät mit den Merkmalen des Anspruchs 7 verwendet. Bildschirme, welche aufgrund ihrer Maße und ihres geringen Energiebedarfs geeignet sind, auf Karten angebracht zu werden, sind aus dem Stand der Technik beispielsweise als Active Matrix Display bekannt. Sie werden zum Beispiel von der Firma E-Ink Corporation, Cambridge, USA angeboten. Sie haben den Vorteil, dass die auf dem Bildschirm angezeigte Information auch dann noch erkennbar ist, wenn die Energiequelle abgeschaltet wird. Selbst wenn die Karte daher keine eigene Energiequelle besitzt, ist die auf dem Bildschirm angezeigte Information noch vorhanden, wenn der Benutzer die Karte aus dem Schreib-Lese-Gerät herausnimmt.

Anhand des Bildschirms hat der Benutzer die Möglichkeit, den Kartenhintergrund individuell zu gestalten. Er ist dabei nicht auf Bilder oder Grafiken angewiesen, die der Kartenhersteller zur Verfügung stellt. Er kann entweder auf eine Anzahl von Bildern zurückgreifen, die im Datenspeicher des Schreib-Lese-Geräts abgelegt sind, über die Schnittstelle des Schreib-Lese-Gerätes weitere Bilder aus einem Computer laden, oder eigene Bilder entwerfen.

Darüber hinaus kann der Bildschirm Daten anzeigen, welche auf dem Speicherchip oder dem Magnetstreifen der Karte abgelegt sind. Um die Informationen sichtbar zu machen, führt der Benutzer die Karte in das erfindungsgemäße Schreib-Lese-Gerät ein. Über die Schnittstelle zwischen Schreib-Lese-Gerät und Karte werden die Informationen auf die Karte geladen und auf dem Bildschirm angezeigt.

Das erfindungsgemäße Schreib-Lese-Gerät ist mit einem Kartenhalter ausgestattet, welcher nicht wesentlich größer ist, als eine bekannte Schutzhülle für die Karten. Wenn die Karte vollständig in den Kartenhalter des Schreib-Lese-Geräts eingeführt ist, werden die Schnittstellen von Karte und Schreib-Lese-Gerät so miteinander verbunden, dass Daten ausgetauscht werden können. Dieser Austausch kann entweder durch einen elektrischen Kontakt oder kontaktfrei beispielsweise durch magnetische Kopplung erfolgen.

Das Schreib-Lese-Gerät besitzt eine Eingabevorrichtung, über die der Benutzer Daten eingeben kann, und über die er sich identifizieren kann. Erst wenn der Benutzer identifiziert wurde, erfolgt ein Austausch von Daten zwischen dem Schreib-Lese-Gerät und der Karte. Dadurch wird der Missbrauch verhindert. Der Zugriff nicht berechtigter Dritter wird verwehrt.

In dem Datenspeicher des Schreib-Lese-Geräts können die Daten für alle Anwendungen, die der Benutzer unter Verwendung einer Karte ausführen muss, abgelegt sein. Wenn der Benutzer eine bestimmte Anwendung ausführen möchte, so lädt er mit Hilfe des Schreib-Lese-Gerätes die für die Anwendung notwendigen Daten über die Schnittstelle auf die Karte. Der Speicherchip oder der Magnetstreifen der Karte werden dabei mit den notwendigen Daten versehen. Gegebenenfalls werden die Daten auch auf dem Bildschirm der Karte angezeigt. Die mit den entsprechenden Daten versehene Karte kann anschließend wie eine aus dem Stand der Technik bekannte Karte für die betreffende Anwendung verwendet werden. Möchte der Benutzer eine andere Anwendung ausführen, so schiebt er seine Karte erneut in das Schreib-Lese-Gerät und lädt die für die neue Anwendung benötigten Daten auf den Speicherchip oder den Magnetstreifen der Karte. Dies führt dazu, dass der Benutzer für alle Anwendungen nur noch eine Karte und das erfindungsgemäße Schreib-Lese-Gerät benötigt. Auf Wunsch des Anwenders kann die auf dem Bildschirm angezeigte Information durch die Eingabe eines Befehls in die Eingabevorrichtung des Schreib-Lese-Gerätes gelöscht werden. Dies gilt auch für die auf dem Speicherchip oder dem Magnetstreifen der Karte abgelegten Daten. Dadurch wird gewährleistet, dass Dritte keinen Zugriff auf die auf der Karte abgelegten Daten oder Informationen haben. Im Falle eines Diebstahls der Karte oder eines Verlusts der Karte ist der Benutzer vor Missbrauch geschützt.

Das Schreib-Lese-Gerät kann entweder einen Bildschirm aufweisen oder zur Anzeige und Ausgabe der Daten über eine Schnittstelle mit einem externen Computer verbunden werden.

Nach einer vorteilhaften Ausgestaltung der Erfindung ist an der Karte eine Energiequelle vorgesehen, welche den Bildschirm und/ oder den Speicherchip und/oder den Magnetstreifen nur über eine begrenzte Zeit mit Energie versorgt. Nach Ablauf dieser vorgegebenen Zeit verschwinden die auf dem Bildschirm angezeigten Informationen und werden die in dem Speicherchip und/ oder dem Magnetstreifen abgelegten Daten gelöscht. Auch in diesem Fall ist der Benutzer der Karte vor Missbrauch geschützt, wenn er die Karte verliert oder sie gestohlen wird. Dritte haben keine Möglichkeit auf die Daten zuzugreifen. Als mögliche Energiequellen können ein Kondensator, ein Solarzelle oder ein Fuelzelle dienen.

Nach einer weiteren vorteilhaften Ausgestaltung der Erfindung können zwei Bildschirme an der Karte vorgesehen sein. Einer der Bildschirme erstreckt sich über die Vorderseite der Karte, der andere Bildschirm ist an der Rückseite der Karte angeordnet. Die beiden Bildschirme können entweder abhängig oder unabhängig voneinander betrieben werden. So erhöht sich einerseits durch zwei Bildschirme der Platz, um Informationen, Daten oder Bilder darzustellen. Andererseits kann einer der beiden Bildschirme lediglich zur ästhetischen Gestaltung der Karte verwendet werden, während der andere Bildschirm die auf dem Speicherchip oder dem Magnetstreifen der Karte abgelegten Informationen anzeigt.

Nach einer weiteren vorteilhaften Ausgestaltung der Erfindung sind der Speicherchip und/ oder der Magnetstreifen der Karte programmierbar. Karten mit derartigen programmierbaren Speicherelementen werden auch als Smartcard bezeichnet.

Nach einer weiteren vorteilhaften Ausgestaltung der Erfindung werden als Grundsubstrat für die Karte Kunststoff, Keramik oder Pappe verwendet. Darüber hinaus sind weitere geeignete Materialien möglich. In der Praxis wird häufig Kunststoff verwendet.

Nach einer weiteren vorteilhaften Ausgestaltung der Erfindung ist der Datenspeicher des Schreib-Lese-Gerätes ebenfalls programmierbar. Es kann sich dabei beispielsweise um eine magnetische oder optische Festplatte oder ein magnetisches oder optisches Band handeln. Als Prozessor kann ein Mikroprozessor oder ein herkömmlicher Prozessor verwendet werden.

Nach einer weiteren vorteilhaften Ausgestaltung der Erfindung dient als Eingabevorrichtung eine Tastatur oder ein Touch-Screen. Bei einem Touch-Screen werden Befehle oder Daten durch Berührung entsprechender Bereiche auf einen Bildschirm eingegeben. Das Schreib-Lese-Gerät kann mit einem eigenen Bildschirm ausgestattet sein. Es besteht jedoch auch die Möglichkeit, die gewünschten Daten über einen Computer anzuzeigen, mit dem das Schreib-Lese-Gerät über eine Schnittstelle verbunden ist.

Nach einer weiteren vorteilhaften Ausgestaltung der Erfindung ist das Schreib-Lese-Gerät mit einer biometrischen Erkennungsvorrichtung ausgestattet. In diesem Fall muss der Benutzer sich zunächst anhand seines Fingers oder anderer körperlicher Merkmale ausweisen, um seine Berechtigung nachzuweisen.

Nach einer weiteren vorteilhaften Ausgestaltung der Erfindung ist eine kryptografische Vorrichtung an dem Schreib-Lese-Gerät vorgesehen. Die ausgetauschten Daten werden durch diese kryptografische Vorrichtung verschlüsselt, so dass der Zugriff unberechtigter Dritter auf die Daten erschwert wird. Die kryptografische Vorrichtung kann dabei den Prozessor des Schreib-Lese-Gerätes nutzen oder mit einem gesonderten Prozessor beispielsweise einem Mikroprozessor ausgestattet sein.

Nach einer weiteren vorteilhaften Ausgestaltung der Erfindung werden die Karte und das Schreib-Lese-Gerät verwendet damit eine Authentifizierung eines Benutzers vor der Durchführung von Bank-Geschäften vorgenommen werden kann. Hierzu legt der Benutzer seine Karte in das Schreib-Lese-Gerät ein und gibt seine individuellen Daten in die Eingabevorrichtung des Schreib-Lese-Geräts ein. Dabei kann es sich beispielsweise um eine PIN oder um seinen Finger handeln, dessen Daten anhand der biometrischen Erkennungsvorrichtung des Schreib-Lese-Geräts ausgewertet werden. Sobald der berechtigte Benutzer anhand seiner individuellen Daten erkannt wurde können die Transaktionen mit der Bank durchgeführt werden. Dabei kann es beispielsweise sich um das Abheben von Bargeld, die Durchführung von Überweisungen oder sonstigen Zahlungsaufträgen handeln.

Weitere Vorteile und vorteilhafte Ausgestaltungen der Erfindung sind der nachfolgenden Beschreibung, der Zeichnung und den Ansprüchen entnehmbar.

### Zeichnung

In der Zeichnung sind Ausführungsbeispiele der Erfindung dargestellt und im Folgenden näher beschrieben. Es zeigen:
Figur 1 Karte in einer Ansicht von vorne,
Figur 2 Karte in einer Ansicht von hinten,
Figur 3 erstes Ausführungsbeispiel einer Karte gemäß Figur 1 in Seitenansicht mit Blick auf die Längsseite,
Figur 4 Karte gemäß Figur 3 mit Blick auf die Schmalseite,
Figur 5 zweites Ausführungsbeispiel einer Karte in Seitenansicht mit Blick auf die Längsseite,
Figur 6 Karte gemäß Figur 5 mit Blick auf die Schmalseite,
Figur 7 Schreib-Lese-Gerät in aufgeklappter Darstellung,
Figur 8 Schreib-Lese-Gerät gemäß Figur 7 mit einer Verbindung zu einem externen Computer,
Figur 9 Schreib-Lese-Gerät gemäß Figur 7 mit einer Verbindung zu einer Bank.

### Beschreibung der Ausführungsbeispiele

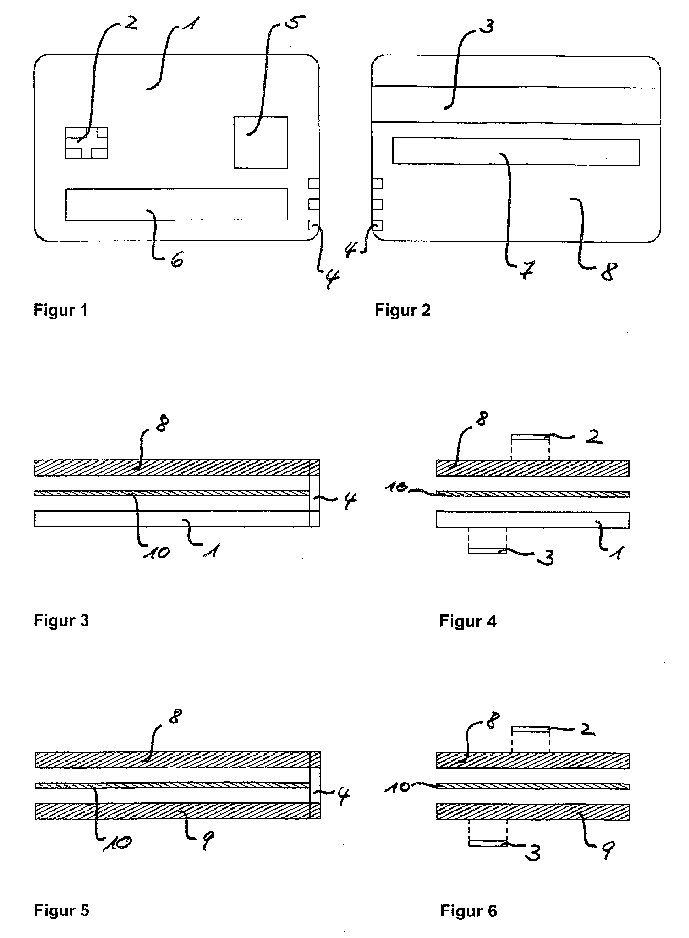

In den Figuren 1 und 2 ist eine Karte in einer Ansicht von vorne und hinten dargestellt. Die Karte weist das von Kredit- und Scheckkarten bekannte übliche Format auf. Sie besteht aus einem Grundsubstrat 1, einem Speicherchip 2, einem Magnetstreifen 3 und mehreren elektrischen Kontakten 4. Auf der Vorderseite gemäß Figur 1 ist außerdem ein Hologramm 5 und ein Namensbereich 6 vorgesehen, in welchem der Name des Datenbenutzers angegeben ist. Auf der Rückseite der Karte gemäß Figur 2 sind ein Unterschriftenfeld 7 und ein Bildschirm 8 vorgesehen. Der Bildschirm 8 nimmt die gesamte Rückseite der Karte ein. Ein entsprechender Bildschirm könnte auch die gesamte Vorderseite der Karte gemäß Figur 1 einnehmen.

Die Figuren 3 bis 6 zeigen Seitenansichten von Karten gemäß den Figuren 1 und 2, welche entweder mit nur einem Bildschirm 8, wie in den Figuren 3 und 4 oder mit zwei Bildschirmen 8 und 9 wie in den Figuren 5 und 6 ausgestattet sind. Bei einer Karte mit zwei Bildschirmen kann gegebenenfalls auf ein Grundsubstrat 1, wie in den Figuren 3 und 4 verzichtet werden. Der Speicherchip 2 und der Magnetstreifen 3 sind in den Figuren 4 und 6 von der Oberfläche der Bildschirme abgehoben dargestellt. Diese Darstellung wurde lediglich gewählt, um die Position des Speicherchips und der Magnetstreifens anzudeuten. Bei der Karte ragen der Speicherchip und der Magnetstreifen nicht über die Kartenoberfläche hinaus. Zwischen dem Grundsubstrat 1 und dem Bildschirm 8 beziehungsweise den beiden Bildschirmen 8 und 9 ist ein Kondensator 10 vorgesehen. Dieser dient als Energiequelle für die Karte.

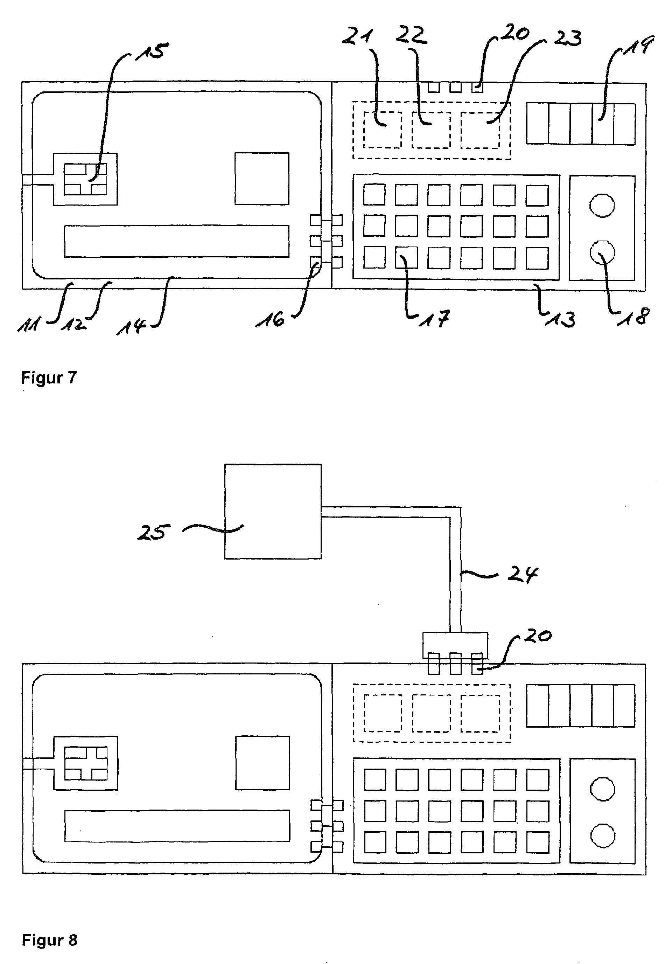

Figur 7 zeigt ein Schreib-Lese-Gerät in einer aufgeklappten Darstellung. Das Schreib-Lese-Gerät besteht aus einem Kartenhalter 11, welcher die Karte aufnimmt und im aufgenommenen Zustand vollständig umschließt. Der Kartenhalter 11 weist ein Unterteil 12 und ein Oberteil 13 auf. In dem Unterteil 12 ist eine Vertiefung 14 vorgesehen, welche dem Umfang der Karte gemäß Figur 1 und 2 entspricht. Darüber hinaus ist eine Speicherchip-Schnittstelle 15 zum Austausch von Daten mit dem Speicherchip der Karte und eine Bildschirm-Schnittstelle 16 zum Austausch von Daten mit dem Bildschirm der Karte vorgesehen. Das Oberteil 13 zeigt den Kartenhalter 11 in einer Ansicht von außen. Zwei Eingabevorrichtungen 17 und 18 dienen zum Eingeben von Daten und Befehlen. Während die Eingabevorrichtung 17 mehrere Tasten aufweist und damit die Möglichkeit zur Eingabe verschiedener Zeichen gibt, sind bei der Eingabevorrichtung 18 lediglich zwei Tasten zur Eingabe von Befehlen vorgesehen. Die Solarzellen 19 dienen als Energiequelle für das Schreib-Lese-Gerät. Über die Schnittstelle 20 kann das Schreib-Lese-Gerät mit einem externen Computer verbunden werden. Der Datenspeicher 21, der Prozessor 22 und die kryptografische Vorrichtung 23 sind nur gestrichelt dargestellt, da sie von der Außenseite des Schreib-Lese-Geräts nicht erkennbar sind. Sie befinden sich an dessen Innenseite.

Figur 8 zeigt das Schreib-Lese-Gerät gemäß Figur 7 wobei an die Schnittstelle 20 über ein Kabel 24 ein Computer 25 angeschlossen ist. Als Schnittstelle dient beispielsweise eine USB-Schnittstelle oder eine serielle Schnittstelle. Auf diese Weise können zwischen dem Computer und dem Schreib-Lese-Gerät Daten ausgetauscht werden. Außerdem kann der Monitor des Computers dazu verwendet werden, um bestimmte Daten anzuzeigen. Das in der Zeichnung dargestellte Schreib-Lese-Gerät ist nicht mit einer separaten Anzeige ausgestattet.

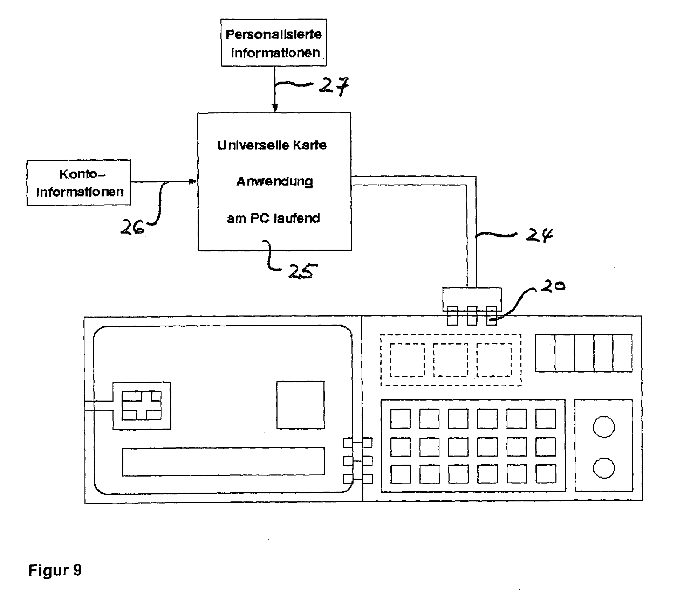

Das in Figur 9 dargestellte Schreib-Lese-Gerät ist ebenfalls über eine USBoder serielle Schnittstelle mit einem Computer verbunden. Hierbei handelt es sich um eine spezielle Anwendung zum Austausch von Daten zwischen der Karte eines Benutzers und einer Bank. Über einen sicheren Kanal 26 werden Kontoinformationen und über einen Kanal 27 Personendaten ausgetauscht. Derartiger Datenaustausch ist bereits aus dem Online-Banking bekannt.

Sämtliche Merkmale der Erfindung können sowohl einzeln als auch in beliebiger Kombination miteinander erfindungswesentlich sein.

### Bezugszahlenliste

- 1: Grundsubstrat
- 2: Speicherchip
- 3: Magnetstreifen
- 4: elektrischer Kontakt
- 5: Hologramm
- 6: Namensbereich
- 7: Unterschriftenfeld
- 8: Bildschirm
- 9: Bildschirm
- 10: Kondensator
- 11: Kartenhalter
- 12: Unterteil
- 13: Oberteil
- 14: Vertiefung
- 15: Speicherchip-Schnittstelle
- 16: Bildschirm-Schnittstelle
- 17: Eingabevorrichtung
- 18: Eingabevorrichtung
- 19: Solarzelle
- 20: Schnittstelle
- 21: Datenspeicher
- 22: Prozessor
- 23: kryptografische Vorrichtung
- 24: Kabel
- 25: Computer
- 26: sicherer Kanal
- 27: Kanal

## Patentansprüche

1. Karte, die über Schnittstellen, die als Kontakte an der Oberfläche der Karte vorliegen oder kontaktlos über induktive Kopplung oder eine andere Wechselwirkung funktionieren, mit einem Schreib-Lese-Gerät kommunizieren kann,
mit einem Magnetstreifen (3) und/ oder mit einem Speicherchip (2), und
mit einem Anzeigemittel,
**dadurch gekennzeichnet,**
**dass** als Anzeigemittel ein Bildschirm (8, 9) vorgesehen ist, der Daten anzeigt, die über die Schnittstellen (16) von dem Schreib-Lese-Gerät an die Karte übermittelt werden.

2. Karte nach Anspruch 1, **dadurch gekennzeichnet, dass** an der Karte eine Energiequelle (10) vorgesehen ist, welche den Bildschirm (8, 9) und/ oder den Speicherchip (2) und/ oder den Magnetstreifen (3) nur über eine begrenzte Zeit mit Energie versorgt, wobei die auf dem Bildschirm (8, 9) angezeigten und/ oder in dem Speicherchip (2) und/ oder in dem Magnetstreifen (9) enthaltenen Daten nach Ablauf der Zeit verschwinden.

3. Karte nach Anspruch 2, **dadurch gekennzeichnet, dass** als Energiequelle ein Kondensator (10), eine Solarzelle oder eine Fuelzelle vorgesehen sind.

4. Karte nach Anspruch 1, 2 oder 3, **dadurch gekennzeichnet, dass** zwei Bildschirme (8, 9) an der Karte vorgesehen sind, wobei einer an der Vorder- und der andere an der Rückseite der Karte angeordnet ist.

5. Karte nach einem der vorhergehenden Ansprüche, **dadurch gekennzeichnet, dass** der Speicherchip (2) und/ oder der Magnetstreifen (3) programmierbar sind.

6. Karte nach einem der vorhergehenden Ansprüche, **dadurch gekennzeichnet, dass** ein Grundsubstrat (1) für die Karte vorgesehen ist, welches aus Kunststoff, Keramik oder Pappe besteht.

7. Schreib-Lese-Gerät für eine Karte nach einem der Ansprüche 1 bis 6,
**dadurch gekennzeichnet,**
**dass** ein Kartenhalter (11) vorgesehen ist, welcher die Form einer Schutzhülle für die Karte aufweist,
**dass** an dem Kartenhalter ein Datenspeicher (21) vorgesehen ist,
**dass** an dem Kartenhalter ein Prozessor (22) vorgesehen ist,
**dass** eine Schnittstelle (15, 16) zum Datenaustausch mit der Karte vorgesehen ist,
**dass** eine Schnittstelle (20) zum Datenaustausch mit einem Computer (25) oder einem Computernetzwerk vorgesehen ist,
**dass** eine Eingabevorrichtung (17, 18) zur Eingabe von Daten oder Befehlen vorgesehen ist,
**dass** eine Energiequelle (19) vorgesehen ist.

8. Schreib-Lese-Gerät nach Anspruch 7, **dadurch gekennzeichnet, dass** der Datenspeicher (21) programmierbar ist.

9. Schreib-Lese-Gerät nach Anspruch 7, **dadurch gekennzeichnet, dass** der Datenspeicher (21) statisch oder nicht statisch ist.

10. Schreib-Lese-Gerät nach Anspruch 7, **dadurch gekennzeichnet, dass** der Datenspeicher eine magnetische oder optische Festplatte oder ein magnetisches oder optisches Band ist.

11. Schreib-Lese-Gerät nach einem der Ansprüche 7 bis 10, **dadurch gekennzeichnet, dass** als Schnittstelle (16, 17) zum Datenaustausch mit der Karte mehrere Kontaktstifte vorgesehen sind, welche mit dem Speicherchip der Karte in Kontakt treten können.

12. Schreib-Lese-Gerät nach einem der Ansprüche 7 bis 10, **dadurch gekennzeichnet, dass** eine Schnittstelle zur magnetischen Kopplung mit dem Magnetstreifen der Karte vorgesehen ist.

13. Schreib-Lese-Gerät nach einem der Ansprüche 7 bis 12, **dadurch gekennzeichnet, dass** als Eingabevorrichtung eine Tastatur (17, 18) oder ein Touch-Screen vorgesehen ist.

14. Schreib-Lese-Gerät nach einem der Ansprüche 7 bis 12, **dadurch gekennzeichnet, dass** als Eingabevorrichtung ein Mikrophon vorgesehen ist.

15. Schreib-Lese-Gerät nach einem der Ansprüche 7 bis 14, **dadurch gekennzeichnet, dass** ein Bildschirm vorgesehen ist.

16. Schreib-Lese-Gerät nach einem der Ansprüche 7 bis 15, **dadurch gekennzeichnet, dass** eine biometrische Erkennungsvorrichtung vorgesehen ist.

17. Schreib-Lese-Gerät nach einem der Ansprüche 7 bis 16, **dadurch gekennzeichnet, dass** eine kryptografische Vorrichtung (23) vorgesehen ist.

18. Verfahren zur Authentifizierung eines Benutzers vor der Durchführung von Bank-Geschäften, **dadurch gekennzeichnet, dass** der Benutzer eine Karte nach einem der Ansprüche 1 bis 6 in ein Schreib-Lese-Gerät nach einem der Ansprüche 7 bis 17 einführt, eine Eingabe von individuellen Daten des Benutzers in die Eingabevorrichtung des Schreib-Lese-Gerätes erfolgt und die individuellen Daten mit den im Datenspeicher des Schreib-Lese-Geräts abgelegten individuelle Daten verglichen werden.
